# EUROPEAN PATENT APPLICATION

(11) **EP 0 985 909 A1**
(43) Date of publication of application: **15.03.2000**
(21) Application number: 99306937.6
(22) Date of filing: 31.08.1999
(51) Int. Cl.: G01D 5/16, H01C 10/30

(54) **Position sensor and method of making a fiber contactor**

(30) Priority: 10.09.1998 US 151022
(71) Applicant: CTS Corporation, Elkhart Indiana 46514-1899 (US)
(72) Inventor: Shengli, Liu, Elkhart, IN 46514 (US)
(74) Representative: Loven, Keith James

(57) **Abstract**

A contacting position sensor that has a carbon fiber beam and bristle tip design for long life and low wear characteristics. The position sensor has a housing and a resistive element and is located on a flexible film mounted within the housing. A carbon fiber contactor is mounted within the housing and has a carbon fiber beam and a plurality of individual carbon fibers that are attached by an epoxy. The contactor is attached to a rotor which is positioned inside the housing. The carbon fiber contactor is made by placing a plurality of carbon fibers into a sheet of parallel aligned carbon fibers and dispensing an epoxy over the carbon fibers. One end of the carbon fiber sheet is bent and the epoxy cured. The sheet is cut into individual contactors and a bristle tip is then formed on an end of the contactor.

## Description

### FIELD OF THE INVENTION

This invention relates to position sensors. In particular, there is a position sensor that has a carbon fiber beam and bristle tip design for long life.

### DESCRIPTION OF THE RELATED ART

Various devices and methods of dealing with the design of position sensors are legion. More specifically, contacting position sensors have been formed from a contactor tip and a resistive element. The tip moves over the surface of the element and causes an output resistance reading to change. Polymer resistive position sensors are a variable resistor type of electrical devices with a voltage output that converts the linear or angular displacement to an electrical signal. The contactors are conductive moving elements in the sensors that control the voltage output by sliding over a polymer resistive element. These contactors represent a unique type of sliding electrical contacts. They are miniature in design and size. The contactor is typically an alloy of platinum, silver, palladium and or gold. The current density is low at approximately 10 A/sqin or less. They run at slow sliding speeds, around 50 fpm or slower. The contactor should be capable of making good electrical contact under all the application environments, basically, heat and cold, dry and humid, dust, vibration, and etc as other types of contacts do. However, the reliability and noise performance requirements are more crucial than with other types of sliding contacts. The contactor must also have good corrosion resistance.

Currently, the contactors of this type are constructed with metallic materials or alloys, because they are good conductors, easy to process and readily available. Noble alloys such as gold, palladium and platinum alloys are often used because of their non-tarnishing character in all the common air pollutants. These noble alloy contactors have been used for decades, and have been well accepted in the industry. Because of their industry-wide importance the American Society for Testing and Materials has adopted numerous standards for these alloys, as shown in ASTM Standards Vol. 03.04.

As the contactor tip moves against the element surface wear occurs on both surfaces. The prior art contactor tips are formed from a metal having good wear resistance and spring characteristics, for example beryllium copper. The prior art resistive elements have been formed from carbon and polymer combinations that are screened onto a substrate and dried.

Examples of patents related to the present invention are as follows:
US-A-5,416,295 discloses a combined pedal force switch and position sensor;
US-A-5,415,144 discloses a throttle position validation method and apparatus;
US-A-5,385,068 discloses an electronic accelerator pedal assembly with pedal force sensor;
US-A-5,321,980 discloses an integrated throttle position sensor with independent position validation sensor;
US-A-5,133,321 discloses an integrated throttle control and idle validation sensor;
US-A-5,039,975 discloses a resistor substrate for a variable resistor employed in a throttle sensor;
US-A-4,703,649 discloses a throttle valve opening sensor;
US-A-4,688,420 discloses a throttle valve position detecting device for a vehicle engine;
US-A-4,616,504 discloses a throttle position sensor with a potentiometer module that fits into a connector casing;
US-A-4,435,691 discloses a dual track resistor element having nonlinear output;
US-A-4,334,352 discloses a method of making a variable resistance control; and
US-A-4,430,634 discloses a rotary potentiometer with molded terminal package.

The foregoing documents reflect the state of the art of which the applicant is aware.

### PROBLEM WITH THE RELATED ART

There are several common problems occurring with the prior art. As the metal contactor tip moves against the element over time, it can gouge and pit the element causing the resistance reading to fail or to generate an erroneous resistance reading. Another problem with the prior art devices is that over time the element material can be removed from the element and build up as a loose layer over the surface of the element.

When the contactor tip is moved it skates across the surface of the loose material instead of making electrical contact with the element. This causes the resistance reading from the element to appear as an open circuit with infinite resistance and essentially causes the sensor to be inoperative for a period of time until contact is re-established by the contactor tip to the element.

Poor electrical contacts have often been found associated with the metal contactors, even with noble alloy contactors. As a result, electrical noise is generated from these contactors, which lowers the performance and reliability, and ultimately causes failure of the sensor devices. Excessive wear either from the contactor itself or from the polymer resistive elements has also often been found in this type of sensor, which reduces the durability and even causes premature failure of the sensor devices.

Prior art contacting position sensor designers have attempted to solve these problems by introducing a lubricant into the contactor tip/element interface. A typical lubricant can be an emulsification of Teflon particles. The lubricant reduces the frictional forces between the wear surface while still allowing electrical contact to be made between the contactor tip and the resistive element. The liquid lubricant is applied to the contact surfaces to reduce the wear. However, most of the liquid lubricants are poor electrical conductors, thereby causing relatively high electrical resistance across contact surfaces and possible failure of the devices where lubricants have been used improperly. The viscosity of the liquid lubricant changes significantly over the application temperature range, resulting in poor contact at low temperatures and insufficient lubrication at high temperatures. There are several other problems that arise from using a lubricant in the contactor system. First, the amount of lubricant applied is critical to the performance of the system. If too little lubricant is applied, the system will have excessive wear. If too much is applied, erroneous resistance readings due to skating will occur. It is very difficult to repeatably apply a uniform layer of the lubricant. Second, using a lubricant adds additional cost in material and labor to the overall sensor cost. Therefore, there is a need for a less expensive sensor unit that can eliminate the use of lubricants and has improved wear characteristics.

The preferred embodiment of the invention is designed to solve the problems herein described and other problems not discussed, which are discoverable by a skilled artisan.

### SUMMARY OF THE INVENTION

It is a feature of the invention to provide a position sensor. In particular, there is a contacting position sensor that has a housing and a resistive element that is located on a substrate or flexible film and is mounted within the housing. A carbon fiber contactor is mounted within the housing and has a first and second carbon fiber beam and a plurality of individual carbon fibers protruding from an end of each of the beams. The individual carbon fibers are in electrical contact with the resistive element. The beam is made of individual carbon fibers that are attached by an epoxy. The contactor is attached to a rotor or a driving arm which is positioned inside the housing.

Yet another feature of the invention is to provide a contacting position sensor that has low wear characteristics without using expensive lubricants.

Yet another feature of the invention is to provide a method of manufacturing a carbon fiber contactor including the steps of: placing a plurality of carbon fibers into a sheet of parallel aligned carbon fibers; dispensing an epoxy over the carbon fibers or impregnating the carbon fibers with a polymer binder; bending one end of the carbon fiber sheet such that the sheet has a j shape; curing the epoxy on the bent carbon fiber sheet; curing the bent carbon fiber sheet into individual carbon fiber contactors; and etching an end of the carbon fiber contactors to form a bristle tip using either a water jet or a laser or a heat or flame source.

Those skilled in the art will appreciate that the conception, upon which this disclosure is based, may readily be utilized as a basis for the designing of other structures, methods and systems for carrying out the several purposes of the present invention.

### BRIEF DESCRIPTION OF THE DRAWINGS

Fig. 1 is a side view of the carbon fibers formed into a beam using an epoxy and having a bristle tip; and
Fig. 2 is a perspective drawing of a position sensor incorporating the carbon fiber contactor of Figure 1.

It is noted that the drawings of the invention are not to scale. The drawings are merely schematic representations, not intended to portray specific parameters of the invention. The drawings are intended to depict only typical embodiments of the invention. In the drawings, like numbering represents like elements between the drawings.

### DETAILED DESCRIPTION OF THE PREFERRED EMBODIMENT

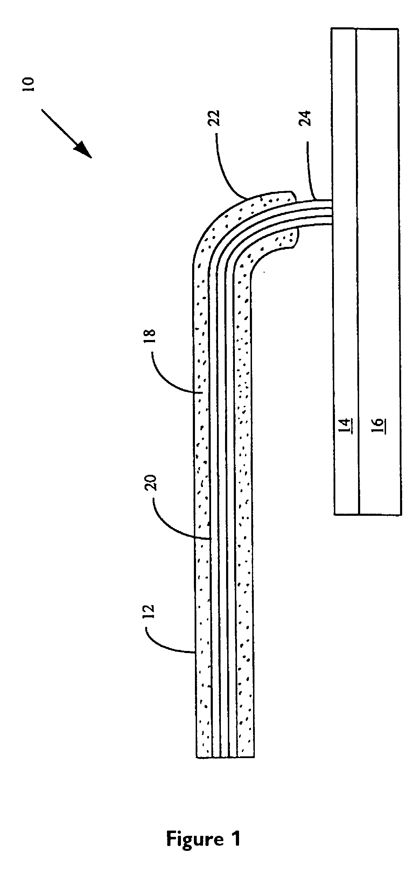

Referring to Figure 1, a carbon fiber contactor assembly 10 is shown. An elongated beam 12 has an arc shaped end 22. Beam 12 is formed from individual carbon fibers 20 which are held together by an epoxy 18. The carbon fibers are 10 micron diameter carbon fibers, type P55, commercially available from Amoco Corporation, Chicago, IL. The epoxy is a conventional two part epoxy commercially available from Epoxy Technologies Corporation, Billerica, MA under the brand name Epo-Tek 353ND. Carbon fibers 20 protrude from epoxy 22 at the end of arc 22 to form bristle tips 24. Bristle tips 24 are in electrical contact with a resistive element 14. Resistive element 14 rests on and is supported by a flexible film or substrate 16.

During operation, bristle tips 24 move over resistive element 14 causing a voltage reading to change as an electrical signal passes through carbon fibers 20, bristle tips 24 and resistive element 14. In a typical position sensor application, a pair of electrically connected contactor assemblies 10 are used along with a pair of resistive elements 14 that are electrically connected. The path of the electrical circuit is as follows, a position dependent voltage from resistive element 14 is communicated through carbon fiber end or tip 22, carbon fibers 23, beam 12, other beam 12, other carbon fibers 23, other carbon fiber tip 22 and through other resistive element 14 which is connected to the output of the sensor.

The carbon fiber contactor with bristle tips is manufactured by the following process. First, several carbon fibers 20 are placed to form a sheet of parallel aligned carbon fibers and an epoxy 18 is dispensed over the carbon fibers. One end of the carbon fiber sheet is bent forming arc 22 such that the sheet has a "J" shape and the epoxy is then cured. The bent carbon fiber sheet is cut to form the individual carbon fiber contactors 10 using a saw or water jet. The end of the carbon fiber contactors is etched to form bristle tips 24 using a water jet or a laser or a heat or flame source, for example.

Additionally, bristle tips 24 can be trimmed with laser, water jet or other mechanical means. It is noted that tips 24 can also be polished with fine abrasive surface to improve the contact.

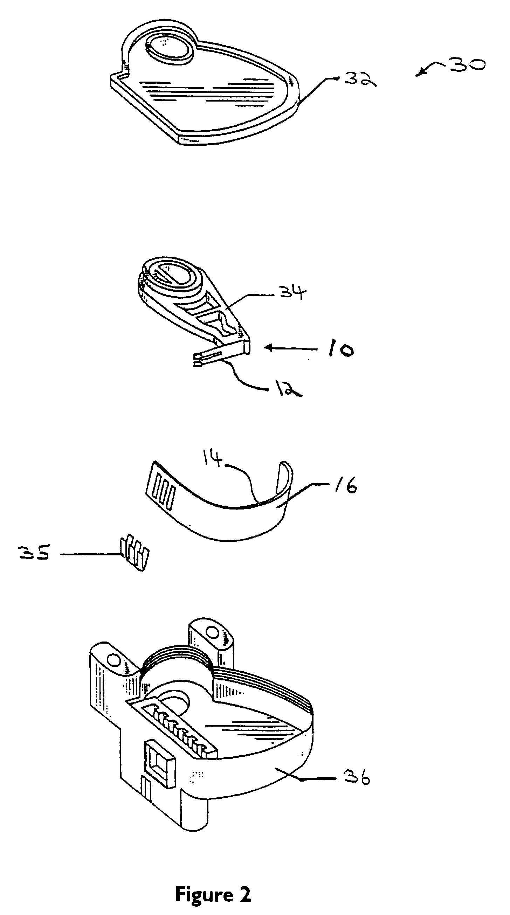

Referring to Figure 2, there is a contacting position sensor assembly 30. In particular, sensor 30 has a housing 36, a cover 32 forming a top side of the sensor unit 30, a rotor 34, a flexible film 16, and a connector 35. The carbon fiber contactor assembly 10 is attached to the rotor 34 by suitable means such as heat staking, adhesives or mechanical fasteners such as screws. The flexible film 16 rests in housing 36 as does the rotor 34. The connector 35 connects the resistive element 14 on film 16 to another external connector (not shown). Cover 32 would be placed over housing 36 to complete the sensor assembly 30.

During operation, a shaft (not shown) is engaged with rotor 34 and causes rotor 34 to turn. Rotation of rotor 34 causes contactor assembly 10 to move with respect to resistive element 14. This causes tips 24 to move along resistive element 14, which causes the voltage output reading of an applied signal to change according to the position of rotor 34.

### Remarks About the Preferred Embodiment

One of ordinary skill in the art of designing and using position sensors will realize many advantages from studying and using the preferred embodiment. For example, carbon fiber contactor 10, in contrast to the conventional metallic materials, has high electrical conductivity, high mechanical strength and high wear resistance, chemical inertness, stability at elevated temperatures and good corrosion resistance.

Various parameters must be taken into account when designing a contacting sensor such as the fiber tip length, contact angle to the resistive element, fiber tip thickness and width. The design parameters for the beam include the contactor load force, stiffness, and flexibility. For example, it has been found that a contact angle of 90 degrees is suitable.

Carbon fiber contactor 10 has other advantages such as prolonged service life and contact resistance that throughout the life of the sensor remains consistent. Contactor 10 does not require any kind of lubricant; therefore it can operate under wider temperature ranges. Contactor 10 can also be operated at a higher sliding speed, because there is no skating or hydroplaning, a phenomenon associated with a liquid lubricant. In addition, carbon fiber contactor 10 has demonstrated the capability of dealing with wear debris and film build-up, the common source of noise in a sliding contact due to the cleaning effect from the brush type of fiber tip. Additionally, using carbon fiber contactor 10 results in significantly lower wear of the resistive element 14 and more consistent contact resistance are achievable. The sweeping action of each individual fiber bristle also makes the build up of wear debris very difficult.

### Variations of the Preferred Embodiment

Although the illustrated embodiments discuss the arrangement of a holding the carbon fibers 20 with an epoxy 18, it is contemplated to the use other types of mechanical retention methods such as plastic loops, wire retainers or the fibers could be extruded with a plastic covering, or the fibers could be coated in a pulltrusion process which is commonly used in the plastics industry.

Although the preferred embodiment depicts a certain shaped beam 12 and arc 22, many variations are possible. For example, the beam 12 could extend vertically away from element 14, with the fibers 20 attached to the end of the beam 12.

Even though the preferred embodiment describes placing fibers 20 to form beam 12, fibers 20 could be directly bonded to rotor 34, eliminating beam 12.

Even though the preferred embodiment describes using a two part epoxy 18, a conductive epoxy could be used, for example.

Substrate 16 for resistive element 14 was described as a flexible film, it is possible for substrate 16 to be a ceramic or a printed circuit board.

The invention has been described with reference to the use of carbon fibers. However, it is contemplated that other conductive fiber materials could also be used, for example silicon carbide fibers would be suitable. A skilled artisan will realize that any non-metallic conductive fibers will also work.

The invention has shown a method of manufacturing the carbon fiber contactor. It is contemplated that other methods could also be used, for example the fibers could be extruded with a plastic covering, then cut to length, heated and bent into the "J" shape.

While the invention has been taught with specific reference to these embodiments, someone skilled in the art will recognize that changes can be made in form and detail without departing from the scope of the invention. The described embodiments are to be considered in all respects only as illustrative and not restrictive.

## Claims

1. A position sensor, comprising:
a) a fiber contactor; and
b) a resistive element, disposed adjacent the fiber contactor and in electrical contact therewith

2. A position sensor according to Claim 1, wherein the fiber material is a non-metallic conductor.

3. A position sensor according to Claim 2, wherein the non-metallic conductor is carbon or silicon carbide.

4. A position sensor according to any preceding claim, wherein the fiber contactor comprises a fiber beam having a plurality of fibers protruding from an end thereof.

5. A position sensor according to Claim 4, wherein the beam comprises the plurality of fibers held by an epoxy resin.

6. A position sensor according to Claim 4 or 5, wherein the fibers extend from the end of the beam to the resistive element.

7. A position sensor according to any preceding claim, wherein the fiber contactor and the resistive element are contained within a housing.

8. A position sensor according to any preceding claim, wherein the resistive element has at least one resistor and a pair of output pads.

9. A position sensor according to any preceding claim, wherein the fiber contactor is attached to a rotor.

10. A position sensor according to Claim 7, wherein the resistive element is disposed on a flexible film and mounted within the housing, and the fiber contactor has a first and second fiber beam and a plurality of individual fibers protruding from an end of each of the beams, the individual fibers being in electrical contact with the resistive element.

11. A method of manufacturing a fiber contactor, comprising the steps of:
a) placing a plurality of conductive fibers into a sheet of parallel aligned fibers;
b) dispensing an epoxy over the fibers;
c) bending one end of the fiber sheet such that the sheet has a j shape;
d) curing the epoxy on the bent fiber sheet;
e) cutting from the bent fiber sheet, a plurality of individual fiber contactors; and
f) forming a bristle tip on an end of the fiber contactors.

12. A method according to Claim 11, wherein the bristle tip is formed using a water jet.

13. A method according to Claim 11, wherein the bristle tip is formed using a laser.

14. A method according to Claim 11, wherein the bristle tip is formed using a heat or flame source.

15. A method according to any of Claims 11 to 14, wherein the fiber material is a non-metallic conductor.

16. A method according to Claims 15, wherein the non-metallic conductor is carbon or silicon carbide.
